Europäisches Patentamt

European Patent Office

Office européen des brevets

(19)

(11) Veröffentlichungsnummer: **0 263 395 B1**

(12) **EUROPÄISCHE PATENTSCHRIFT**

(45) Veröffentlichungstag der Patentschrift: **30.10.91**

(51) Int. Cl.5: **H02B 11/02**

(21) Anmeldenummer: **87114149.5**

(22) Anmeldetag: **28.09.87**

(54) **Einrichtung zum Fahren eines Schalterwagens in- und ausserhalb einer Schaltzelle.**

(30) Priorität: **10.10.86 DE 3634615**

(43) Veröffentlichungstag der Anmeldung:
**13.04.88 Patentblatt 88/15**

(45) Bekanntmachung des Hinweises auf die
Patenterteilung:
**30.10.91 Patentblatt 91/44**

(84) Benannte Vertragsstaaten:
**AT DE GB NL**

(56) Entgegenhaltungen:
**DE-A- 1 951 895**
**DE-B- 1 285 037**
**FR-A- 2 174 726**

(73) Patentinhaber: **SIEMENS AKTIENGESELL-
SCHAFT**
**Wittelsbacherplatz 2**
**W-8000 München 2(DE)**

(72) Erfinder: **Poth, Rainer**
**Freiherr-von-Stein-Strasse 2**
**W-6368 Bad Vilbel 4(DE)**

Rank Xerox (UK) Business Services

**Beschreibung**

Die Erfindung bezieht sich auf eine Einrichtung zum Fahren eines Schalterwagens in- und außerhalb einer Schaltzelle nach dem Oberbegriff des Anpruches 1.

Es ist bereits eine Einrichtung zum Fahren eines Schalterwagens in- und außerhalb einer Schaltzelle der im Oberbegriff des Anspruches 1 genannten Art bekannt. Jeweils ein Rad und eine Rolle sind hierbei nebeneinander auf einer ihnen gemeinsamen Achse fliegend gelagert. Als Hubrollen sind zwei Kugeln vorgesehen, die beide vor dem vorderen Räderpaar am Schalterwagen angeordnet sind. Die Auflaufschräge liegt ortsfest vor der Schaltzelle. Sie besteht aus zwei flachen Keilen. Jeder der Keile ist jeweils einer der Hubrollen zugeordnet. Die bekannte Einrichtung hat sich bei offenen Schaltzellen bewährt. Bei einer gekapselten Schaltzelle mit einer Fronttür wäre sie nur bedingt geeignet. Die Tür müßte so hoch angeschlagen sein, daß ihr unterer Rand über der Auflaufschräge liegt, andernfalls sie nicht geschlossen werden könnte. Selbst wenn die Tür hoch genug angeschlagen wäre, könnte sie an ihrem unteren Rand nicht ohne eine Schwelle an der Zelle spaltfrei geschlossen werden. Eine solche Schwelle wäre jedoch ein Hinternis für die Räder (DE-C1 1 285 037).

Es ist auch ein elektrisches Schaltfeld mit einem über dem umliegenden Bodenniveau liegenden Fahrboden für einen Schalterwagen bekannt, der ebenfalls zwei Räderpaare aufweist. Die Räder sind jeweils mit abfallenden Schultern versehen. Der Fahrboden enthält für jede Fahrspur der Räder zwei dreieckförmige Einschnitte, deren Flanken Anlaufkanten für die Schultern der Räder bilden. Die Flanken der Einschnitte und die Schultern der Räder wirken so zusammen, daß der Schalterwagen bei seinem Einfahren in die Schaltzelle stetig angehoben wird, bis die Räder auf dem Fahrboden aufliegen. Auch diese bekannte Anordnung erlaubt es nicht, eine Schwelle für ein spaltfreies Schließen einer Tür anzubringen, da die Schwelle zwangsläufig ebenfalls im Fahrweg der Räder des Schalterwagens liegen müßte (DE-C1 2 802 745).

Aufgabe der Erfindung ist es, die Einrichtung zum Fahren eines Schalterwagens in- und außerhalb einer Schaltzelle der im Oberbegriff des Abspruches 1 genannten Art so auszubilden, daß sie ein spaltfreies Schließen einer Tür der Schaltzelle erlaubt.

Die gestellte Aufgabe wird erfindungsgemäß durch die im kennzeichnenden Teil des Anspruches 1 angegebenen Ausbildung gelöst.

Ein besonderer Vorteil liegt darin, daß die Einrichtung ohne vor der Schaltzelle liegende, eine Stolpergefahr bildende Teile auskommt.

Zweckmäßige Aus- und Weiterbildungen des Erfindungsgenstandes sind in den Ansprüchen 2 bis 4 angegeben.

Ein Ausführungsbeispiel der Erfindung ist in der Zeichnung rein schematisch dargestellt. Es zeigen:

Fig. 1    eine Seitenansicht eines Schalterwagens außerhalb und einer Schienenspur innerhalb einer Schaltzelle.

Fig. 2    eine Seitenansicht wie in Fig. 1, wobei jedoch der Schalterwagen bis an die Schienenspur herangefahren ist.

Fig. 3    eine Seitenansicht wie in Fig. 2, wobei jedoch das vordere Räderpaar des Schalterwagens bereits einen Boden der Schaltzelle berührt.

Fig. 4    eine Seitenansicht wie in Fig. 3, wobei jedoch beide Räderpaare des Schalterwagens auf dem Boden der Schaltzelle stehen.

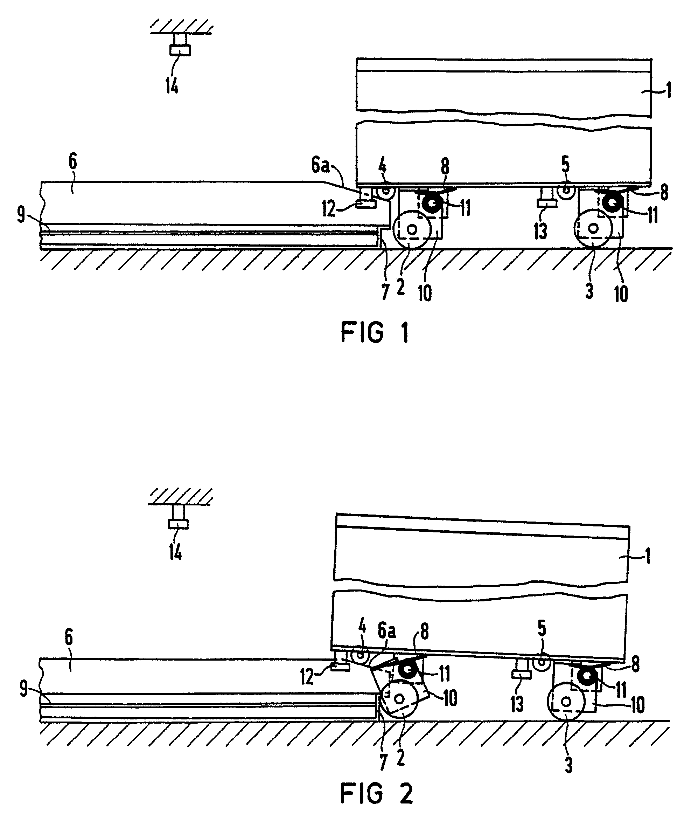

In der Zeichnung ist mit 1 ein Schalterwagen bezeichnet. Am Schalterwagen 1 sind zwei Räderpaare 2, 3 hintereinander angeordnet, von denen infolge der Seitenansicht jeweils nur ein Rad sichtbar ist. Die Räder der Räderpaare 2, 3 dienen zum Fahren des Schalterwagens 1 außerhalb der Schaltzelle (Fig. 1 bis 3).

Der Schalterwagen 1 ist ferner mit Rollen 4, 5 für das Fahren innerhalb der Schaltzelle ausgerüstet. Für die Rollen 4, 5 ist in der im übrigen nicht dargestellten Schaltzelle eine Schienenspur 6 vorgesehen. Der Schienenspur 6 ist eine Auflaufschräge 6a für die Rollen 4, 5 vorgesetzt. Auch die Auflaufschräge 6a liegt innerhalb der Schaltzelle. Im dargestellten Beispiel besteht die Schienenspur 6 aus einer einzigen Flachschiene, an der die Auflaufschräge 6a geformt ist. Die Schienenspur 6 ist derart innerhalb der Schaltzelle angeordnet, daß sie in der Mitte des Fahrweges der Räder der Räderpaare 2, 3 liegt. Anstelle einer einzigen als Schienenspur 6 dienenden Flachschiene, können in nicht gezeigter Weise auch zwei parallele Flachschienen vorgesehen sein.

Im dargestellten Beispiel sind nur zwei Rollen 4, 5 erforderlich. Bei der Verwendung zweier als Schienenspur 6 dienenden Flachschienen) müßten für jede Flachschiene zwei Rollen vorgesehen sein (nicht dargestellt).

Im vorliegenden Falle liegt die eine Rolle 4 mittig vor dem vorderen Räderpaar 2 und die Rolle 5 mittig vor dem hinteren Räderpaar 3.

Die Kopfseite der Auflaufschräge 6a und die Kopfseite der als Schienenspur 6 dienenden Flachschiene bilden ineinander übergehende Laufflächen für die Rollen 4, 5.

Die Rollen 4, 5 und die Auflaufschräge 6a ergeben zusammen eine Hubvorrichtung, mittels derer der Schalterwagen 1 im Verlauf einer Einfahrbewegung auf die Höhe der Schienenspur 6 anhebbar ist, wobei die Rollen 4, 5 als Hubrollen wirken.

Im Fahrweg der Räder der Räderpaare 2, 3 liegt am Eingang zur Schaltzelle eine Schwelle 7, die in nicht gezeigter Weise zum spaltfreien Schließen einer Tür der Schaltzelle dient, also einen unteren Anschlag für die Tür der Schaltzelle bildet.

Um die Schwelle 7 beim Einfahren in die Schaltzelle überwinden zu können, sind die Räder der Räderpaare 2, 3 jeweils durch die Schwelle 7, entgegen der Fahrrichtung und entgegen einer Federkraft 8 aus ihrer Fahrlage in eine die Schwelle 7 übergreifende Lage kippbar.

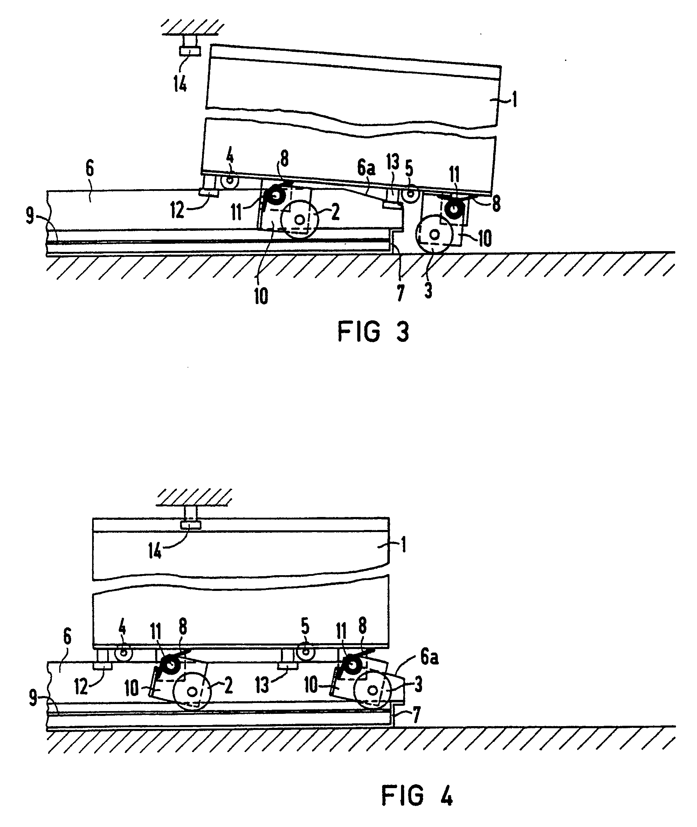

Nach dem Überwinden der Schwelle 7 ist jedes Rad der Räderpaare 2, 3 durch die zugeordnete Federkraft 8 an einem Boden 9 der Schaltzelle anlegbar (Fig. 4). Beim Herausfahren des Schalterwagens 1 aus der Schalterzelle kippt die Schwelle 7 wiederum die Räder in eine sie übergreifende Lage. Nach dem Überwinden der Schwelle 7 werden die Rader sodann durch die ihnen eigene Federkraft 8, in ihre Fahrlage geschwenkt.

Im dargestellten Beispiel sind die Räder der Räderpaare 2, 3 jeweils an einer Schwenkplatte 1o gelagert. Die Federkraft 8 besteht bei jedem Rad aus einer Drehfeder, die auf einem Bolzen 11 sitzt, der eine Schwenkachse für die Schwenkplatte 1o bildet.

Für das Fahren des Schalterwagens 1 in der Schaltzelle dienen ausschließlich die Rollen 4, 5, deren Fahrboden die Schienenspur 6 ist.

Im vorliegenden Beispiel sind für eine seitliche Führung des Schalterwagens 1 zwei Paare hintereinanderliegende untere Führungsrollen 12, 13 vorgesehen. Das vordere Paar Führungsrollen 12 ist so angeordnet, daß sie die Flanken der als Schienenspur 6 dienenden Flachschienen bereits zwischen sich einschließt, wenn die vordere Rolle 4 auf die Auflaufschräge 6a aufläuft. Das hintere Paar Führungsrollen 19 nimmt dagegen eine Lage ein, in der es bereits die Flanken der Flachschiene 6 zwischen sich einschließt, wenn die hintere Rolle 5 auf die Auflaufschräge 6a aufläuft.

Der Schalterwagen 1 ist im dargestellten Beispiel oben durch ein ortsfestes oberes Paar Führungsrollen 14 gegen Kippen gesichert. Das Führungsrollenpaar 14 ist so angeordnet, daß es ein als obere Führungschiene dienendes Teil 15 des Schalterwagens 1 spätestens dann zwischen sich einschließt, wenn die hintere Rolle 5 auf die Auflaufschräge 6 a aufläuft.

## Patentansprüche

1. Einrichtung zum Fahren eines Schalterwagens in- und ausserhalb einer Schaltzelle, mit den Merkmalen:

   a) der Schalterwagen (1) ist mit zwei hintereinander angeordneten Räderpaaren (2,3) für das Fahren außerhalb und Rollen (4,5) für das Fahren innerhalb der Schaltzelle ausgerüstet;

   b) für die Rollen (4,5) ist in der Schaltzelle eine Schienenspur (6) vorgesehen;

   c) der Schienenspur (6) ist eine Auflaufschräge (6a) vorgesetzt, die zusammen mit am Schalterwagen (1) angeordneten Hubrollen eine Hubvorrichtung bildet, mittels derer der Schalterwagen (1) im Verlauf einer Einfahrbewegung auf eine Höhe anhebbar ist, bei der die Rollen (4,5) auf dem Niveau der Schienenspur (6) liegen;

   **gekennzeichnet durch** die Merkmale:

   d) die Rollen (4,5) sind zugleich die Hubrollen;

   e) im Fahrweg der Räder der Räderpaare (2,3) liegt in der Schaltzelle eine Schwelle (7);

   f) die Räder der Räderpaare (2,3) sind jeweils beim Auflaufen der Rollen (4,5) auf die Auflaufschräge (6a), durch die Schwelle (7), entgegen der Fahrrichtung und entgegen einer Federkraft (8) aus ihrer Fahrlage in eine die Schwelle (7) übergreifende Lage kippbar und sodann durch die Federkraft (8) an einen Boden (9) der Schaltzelle (1) anlegbar.

   g) die Auflaufschräge (6a) liegt innerhalb der Schaltzelle.

2. Einrichtung nach Anspruch 1, **dadurch gekennzeichnet,** daß die Schienenspur (6) aus einer einzigen Flachschiene besteht, die sich in der Mitte des Bodens (9) der Schaltzelle befindet und die Auflaufschräge (6a) aufweist; daß mindestens zwei Rollen (4,5) vorgesehen sind, von denen eine mittig vor dem vorderen Räderpaar (2) und die andere mittig vor dem hinteren Räderpaar (3) liegt und daß die Kopfseite der Schienenspur (6) als Lauffläche für die Rollen (4,5) dient, für die auch die Kopfseite der Auflaufschräge (6a) eine Lauffläche bildet.

3. Einrichtung nach Anspruch 1 und 2, **dadurch gekennzeichnet,** daß der Schalterwagen (1) zu seiner seitlichen Führung mindestens zwei Paar hintereinander angeordnete untere Führungsrollen (12,13) aufweist; daß das vordere Paar Führungsrollen (12) eine Lage einnimmt, in der es bereits die Flanken der Flachschiene (6) zwischen sich einschließt, wenn die vordere Rolle (4) auf die Auflaufschräge (6a) aufläuft und daß das hintere Paar Führungsrollen (13) eine Lage einnimmt, in der es bereits die Flanken der Flachschiene (6) zwischen sich einschließt, wenn die hintere Rolle (5) auf die Auflaufschräge (6a) aufläuft.

4. Einrichtung nach Anspruch 1, **dadurch gekennzeichnet,** daß sich ortsfest in der Schaltzelle ein oberes Paar Führungsrollen (14) befindet, das eine Lage einnimmt, in der es ein als obere Führungschiene dienendes Teil des Schalterwagens spätestens dann zwischen sich führt, wenn die hintere Rolle (5) auf die Auflaufschräge aufläuft.

## Claims

1. A device for driving a switch truck inside and outside a switchgear cell with the features:

    a) the switch truck (1) is equipped with two pairs of wheels (2,3) arranged one behind the other, for driving outside the switchgear cell and rollers (4,5) for driving inside the switchgear cell;

    b) for the rollers (4,5) there is provided a rail track (6) in the switchgear cell;

    c) placed before the rail track (6) there is an abutment slope (6a), which forms, together with the lifting rollers arranged on the switch truck (1), a lifting device, by means of which the switch truck (1) is able to be lifted to a height, in the course of a run-in motion, at which height the rollers (4,5) lie at the level of the rail track (6);

    characterised by the features:

    d) the rollers (4,5) are simultaneously the lifting rollers;

    e) lying in the roadway of the wheels of the pairs of wheels (2,3) in the switchgear cell there is a ledge (7);

    f) the wheels of the pairs of wheels (2,3) are in each case able to be tilted, when mounting the rollers (4,5) on the abutment slope (6a), by the ledge (7), against the driving direction and against a spring force (8), from their driving position into a position engaging over the ledge (7) and then through the spring force (8) are able to be laid on a base (9) of the switchgear cell (1).

    g) the abutment slope (6a) lies within the switchgear cell.

2. A device according to claim 1, characterised in that the rail track (6) consists of a single flat rail, which is located in the centre of the base (9) of the switchgear cell and has the abutment slope (6a); in that at least two rollers (4,5) are provided, one of which lies centrally in front of the front pair of wheels (2) and the other centrally in front of the rear pair of wheels (3), and in that the top face of the rail track (6) serves as a bearing surface for the rollers (4,5), for which the top face of the abutment slope (6a) also forms a bearing surface.

3. A device according to claim 1 and 2, characterised in that the switch truck (1) has for its lateral guidance at least two pairs of lower guide rollers (12,13) arranged behind each other; in that the front pair of guide rollers (12) adopts a position in which it encloses the sides of the flat rail (6) between it, when the front roller (4) mounts the abutment slope (6a) and in that the rear pair of guide rollers (13) adopts a position in which it already encloses the sides of the flat rail (6) between it, when the rear roller (5) mounts the abutment slope (6a).

4. A device according to claim 1, characterised in that located in a stationary manner in the switchgear cell is an upper pair of guide rollers (14), which adopts a position, in which it guides a part of the switch truck serving as upper guide rail guides between it at the latest when the rear roller (5) mounts the abutment slope.

## Revendications

1. Dispositif pour amener un chariot porte-interrupteur dans et à l'extérieur d'une cellule de coupure, présentant les caractéristiques suivantes :

    a) le chariot porte-interrupteur (1) est équipé de deux couples de roues (2,3), disposés l'un derrière l'autre, pour le déplacement à l'extérieur de la cellule de coupure et de deux galets (4,5) pour le déplacement à l'intérieur de la cellule de coupure;

    b) pour les galets (4,5), il est prévu une piste en forme de rail (6),

    c) la piste en forme de rail (6) est précédée d'une rampe (6a), qui forme, avec des galets de levage montés sur le chariot porte-interrupteur (1), un dispositif de levage à l'aide duquel le chariot porte-interrupteur (1) peut être soulevé, lors d'un déplacement de rentrée, à une hauteur pour laquelle les galets (4,5) sont situés au niveau de la piste en forme de rail (6),

    caractérisé par les particularités suivantes :

    d) les galets (4,5) constituent simultanément les galets de levage;

e) un seuil (7) est situé dans le trajet de déplacement des couples de roues (2,3);

f) lors de la montée des galets (4,5) sur la rampe (6a), le seuil (7) peut faire basculer les roues du couple de roues (2,3), en sens opposé du sens de déplacement et à l'encontre de la force d'un ressort (8), depuis leur position en cours de déplacement dans une position dans laquelle elles s'engagent par-dessus le seuil (7) et peuvent être ensuite appliquées, par la force du ressort (8), contre un fond (9) de la cellule de coupure (1);

g) la rampe (6a) est située à l'intérieur de la cellule de coupure.

2. Dispositif suivant la revendication 1, caractérisé par le fait que la piste en forme de rail (6) est constituée par un seul rail plat qui est situé au centre du fond (9) de la cellule de coupure et possède la rampe (6a); qu'il est prévu au moins deux galets (4,5), dont l'un est disposé en position centrée en avant du couple de roues avant (2) et dont l'autre est disposé en position centré en avant du couple de roues arrière (3), et que le côté de tête de la piste en forme de rail (7) est utilisée comme surface de roulement pour les galets (4,5), pour lesquels le côté tête de la rampe (6a) forme également une surface de roulement.

3. Dispositif suivant les revendications 1 et 2, caractérisé par le fait que le chariot porte-interrupteur (1) possède, pour son guidage latéral, au moins deux couples de galets inférieurs de guidage (12,13) disposés l'un derrière l'autre; que le couple avant de galets de guidage (12) prend une position, dans laquelle ces galets enserrent entre eux déjà les flancs du rail plat (6) lorsque le galet avant (4) monte sur la rampe (6a), et que le couple arrière de galets de guidage (13) prend une position dans laquelle ces galets enserrent déjà entre eux les flancs du rail plat (6) lorsque le galet arrière (5) monte sur la rampe (6a).

4. Dispositif suivant la revendication 1, caractérisé par le fait que dans la cellule de coupure est monté, de façon fixe, un couple supérieur de galets de guidage (14) qui prend une position dans laquelle ces galets enserrent entre eux une partie du chariot porte-interrupteur, qui est utilisée en tant que rail supérieur de guidage, au plus tard lorsque le galet inférieur (5) monte sur la rampe.

FIG 1

FIG 2

FIG 3

FIG 4